(19) Europäisches Patentamt
European Patent Office
Office européen des brevets

(11) Publication number: **0 315 132 B1**

# (12) EUROPEAN PATENT SPECIFICATION

(45) Date of publication of patent specification :
**16.10.91 Bulletin 91/42**

(51) Int. Cl.⁵: **C03B 37/10,** C03B 37/14, G02B 6/16

(21) Application number : **88118223.2**

(22) Date of filing : **02.11.88**

(54) **A method of reducing optical-fibre attenuation.**

(30) Priority : **05.11.87 IT 6794287**

(43) Date of publication of application :
**10.05.89 Bulletin 89/19**

(45) Publication of the grant of the patent :
**16.10.91 Bulletin 91/42**

(84) Designated Contracting States :
**DE FR GB NL SE**

(56) References cited :
**GB-A- 2 149 392
JOURNAL OF LIGHTWAVE TECHNOLOGY,
vol. LT-4, no. 7, July 1986, pages 813-817, New
York, NY, USA; P.K. Bachmann et al.: "Loss
Reduction in Fluorine-Doped SM- and High
N.A.-PCVD Fibers"**

(56) References cited :
**PATENT ABSTRACTS OF JAPAN, vol. 9, no. 96
(C-278)(1819), 25 April 1985; & JP - A - 59
227747 (Showa Densen Denran) 21.12.1984
PATENT ABSTRACTS OF JAPAN, vol. 5, no. 52
(P-56)(724), 11 April 1981; & JP - A - 56 008106
(Toshiba Corp.) 27.01.1981**

(73) Proprietor : **CSELT Centro Studi e Laboratori
Telecomunicazioni S.p.A.
Via Guglielmo Reiss Romoli, 274
I-10148 Turin (IT)**

(72) Inventor : **Di Vita, Pietro
C.so Francia 357
Torino (IT)**

(74) Representative : **Riederer Freiherr von Paar zu
Schönau, Anton et al
Van der Werth, Lederer & Riederer Freyung
615 Postfach 2664
W-8300 Landshut (DE)**

## Description

The present invention refers to optical fibres for telecommunications, and more particularly it concerns a method of reducing optical-fibre attenuation.

It is known that optical-fibre transmissive features of main interest for telecommunications are attenuation and dispersion, which depend upon wavelength : the first feature determines repeater spacing, the second the amount of information which can be transmitted in the time unit. Total attenuation in a fibre depends on various factors, some of which depend in turn on the material characteristics. Among the latter we can indicate :

— Rayleigh scattering, causing an attenuation given by the relation

$$\alpha_{sc} = \alpha_o \, \lambda^{-4}$$

where $\lambda$ = wavelength and $\alpha_o$ = scattering coefficient ;

— lattice bond absorption, causing an attenuation given by the relation $\alpha_{abs} = A \exp (- \gamma\lambda_1/\lambda)$ where A and $\gamma$ are constants, and $\lambda_1$ is a constant of the medium (wavelength of fundamental stretch vibration of lattice bond).

Said two phenomena together generate a total attenuation whose representative curve is V-shaped, with vertex substantially coinciding with the minimum attenuation point.

In case of silica-glass monomode fibres, which are the most-widely used, minimum attenuation point is near 1,55 μm wavelength ; minimum dispersion point (where dispersion is basically zero) is on the contrary at about 1,27 μm, where attenuation is about twice the minimum. The choice of operating at either wavelength depends on the characteristics of the available sources, and corresponds to giving most importance to either repeater spacing or transmission rate, respectively. Hence the importance is clear of producing fibres where the two minima are very closely spaced or even coincident, so as to optimize both characteristics.

Minimum dispersion point can be varied by acting on fibre material refractive-index, and silica-glass fibre production methods have been suggested in which the minimum dispersion point is shifted towards higher wavelengths and is practically made to coincide with that of minimum attenuation. An example is described in the paper entitled : "Low-loss dispersion-shifted single mode fiber manufactured by the OVD process" presented by T.D. Croft, J.E. Ritter and V.A. Bhagavatula at the Conference on Optical Fiber Communication, San Diego (California, U.S.A.), paper WD2, a digest of which is published at page 94 of the conference proceedings. The shift of minimum dispersion is obtained by successively depositing a GeO$_2$-doped silica inner core with a triangular refractive-index profile, a region of pure silica, a GeO$_2$-doped silica outer core with step refractive-index profile, and finally a pure silica cladding.

Such known method is unsatisfactory due to both its complexity, since it requires sophisticated refractive-index variations, and the fact that dopant addition increases the whole attenuation in comparison with a conventional fibre.

Said disadvantages are overcome by the method of the present invention, which does not require complex manufacturing operations and which, by reducing attenuation due to Rayleigh scattering, allows minimum attenuation to be shifted to minimum dispersion region.

The invention is based on the concept that Rayleigh scattering is due to local microfluctuations in vitreous matrix density, which become stabilized ("frozen") at the vitreous transition instant. If matrix atoms are frozen in a lower energy condition because of an external stress, the sizes of inhomogeneity domains are reduced, thereby causing an actual reduction in Rayleigh scattering.

According to the invention, such an external strain is an ultrasonic frequency vibration applied for a short period, e.g. a few minutes.

Advantageously, the fibre is submitted to vibrations while it is heated to a temperature close to, but lower than the softening point (in order not to alter the fibre characteristics) and then is cooled down to room temperature. This promotes atom redistribution and allows operation at lower frequency.

By using the method of the invention, the attenuation due to Rayleigh scattering is reduced, owing to relaxations induced in molecular structure.

The method can be performed by very simple equipment, namely a furnace for heating the fibre to the desired temperature and an ultrasonic generator to make the fibre vibrate.

It is clear that what described has been given only by way of a non limiting example and variations and modifications are possible without going out of the scope of the claims.

## Claims

1. A method of reducing attenuation in silica-glass optical-fibres, characterized in that the fibre is submitted to an ultrasonic-frequency vibration, which causes atom redistribution to a lower-energy condition, hence reducing the sizes of inhomogeneity domains in the fibre material.

2. A method as claimed in claim 1, characterised in that said vibration is applied for a few minutes.

3. A method as claimed in claim 1 or 2, characterized in that the fibre is made to vibrate while being heated to a temperature close to, but lower than the material softening temperature.

4. A method as claimed in claim 3, characterized in that the vibration is also present while the fibre is being cooled down to room temperature.

## Patentansprüche

1. Verfahren zur Verminderung der Dämpfung in optischen Fasern aus Silica-Glas, dadurch gekennzeichnet, daß man die Faser einer Schwingung mit Ultraschallfrequenz unterwirft, die eine Neuverteilung der Atome in einen Zustand niedrigerer Energie bewirkt, wodurch die Größen von Inhomogenitätsbereichen im Fasermaterial vermindert werden.

2. Verfahren nach Anspruch 1, dadurch gekennzeichnet, daß man die Schwingung für einige Minuten anlegt.

3. Verfahren nach Anspruch 1 oder 2, dadurch gekennzeichnet, daß man die Faser in Schwingung versetzt, während sie auf eine Temperatur erhitzt ist, die nahe der Erweichungstemperatur des Materials, jedoch niedriger als diese, ist.

4. Verfahren nach Anspruch 3, dadurch gekennzeichnet, daß man die Vibration fortführt, während die Faser auf Zimmertemperatur abgekühlt wird.

## Revendications

1. Méthode pour réduire l'atténuation des fibres optiques en verre de silice, caractérisée en ce qu'on soumet la fibre à une vibration à fréquence ultrasonique, qui provoque une redistribution des atomes dans un état d'énergie plus faible, en diminuant ainsi les dimensions de domaines d'inhomogénéité éventuels dans la matière de la fibre.

2. Méthode selon la revendication 1, caractérisée en ce qu'on applique la vibration pendant quelques minutes.

3. Méthode selon la revendication 1 ou 2, caractérisée en ce qu'on fait vibrer la fibre pendant qu'on la chauffe à une température proche de, mais inférieure à la température de ramollissement de la matière.

4. Méthode selon la revendication 3, caractérisée en ce que la vibration est également présente pendant qu'on refroidit la fibre jusqu'à la température ambiante.